Europäisches Patentamt

**European Patent Office**

Office européen des brevets

(19)

(11) Numéro de publication: **0 015 203**
**B1**

(12) **FASCICULE DE BREVET EUROPEEN**

(45) Date de publication du fascicule du brevet: **15.02.84**

(51) Int. Cl.³: **F 16 F 15/12, F 16 D 13/68**

(21) Numéro de dépôt: **80400225.1**

(22) Date de dépôt: **18.02.80**

(54) Dispositif amortisseur de torsion, en particulier friction d'embrayage, notamment pour véhicule automobile.

(30) Priorité: **23.02.79 FR 7904719**

(43) Date de publication de la demande:
**03.09.80 Bulletin 80/18**

(45) Mention de la délivrance du brevet:
**15.02.84 Bulletin 84/7**

(84) Etats contractants désignés:
**DE FR GB IT NL SE**

(56) Documents cités:
**FR - A - 2 197 433**
**FR - A - 2 242 606**
**FR - A - 2 270 491**
**FR - A - 2 386 729**
**US - A - 3 296 887**
**US - A - 3 811 545**
**US - E - 27 996**

(73) Titulaire: **VALEO**
**64 Avenue de la Grande Armée**
**F-75017 Paris (FR)**

(72) Inventeur: **Loizeau, Pierre**
**1 Allée de l'Albain**
**F-92140 Ville d'Avray (FR)**

(74) Mandataire: **CABINET BONNET-THIRION**
**95 Boulevard Beaumarchais**
**F-75003 Paris (FR)**

Courier Press, Leamington Spa, England.

## Dispositif amortisseur de torsion, en particulier friction d'embrayage, notamment pour véhicule automobile

La présente invention concerne d'une mainière générale les dispositifs amortisseurs de torsion qui comportent au moins deux parties coaxiales montées rotatives l'une par rapport à l'autre, dans les limites d'un débattement angulaire déterminé, et à l'encontre de moyens élastiques aptes à agir circonférentiellement entre elles, dits ci-après moyens élastiques à action circonférentielle.

Ainsi qu'on le sait, un tel dispositif amortisseur de torsion entre usuellement dans la constitution d'une friction d'embrayage, notamment pour véhicule automobile, l'une de ses parties rotatives portant alors un disque de friction, destiné à être solidarisé en rotation avec un premier arbre, en pratique un arbre menant, l'arbre de sortie d'un moteur, tandis qu'une autre desdites parties rotatives est portée par un moyeu destiné à être solidarisé en rotation avec un deuxième arbre, en pratique un arbre mené, l'arbre d'entrée d'une boîte de vitesses.

Un tel dispositif permet en effet d'assurer une transmission régulée du couple de rotation appliqué à l'une de ses parties rotatives lorsque l'autre est elle-même l'objet d'un couple de rotation, c'est-à-dire de filtrer les vibrations susceptibles de prendre naissance tout au long de la chaîne cinématique, allant du moteur aux arbres de roue commandés, sur laquelle il est inséré.

Ainsi qu'on le sait également, il est avantageux, au moins pour certaines applications, et notamment pour celle relative aux frictions d'embrayage pour véhicules automobiles, que, pour les faibles valeurs du débattement angulaire entre les deux parties rotatives constitutives d'un tel dispositif amortisseur de torsion, le couple transmis entre celles-ci reste faible.

En effet, cette disposition, qui implique la mise en oeuvre de moyens élastiques à action circonférentielle de faible raideur pour les faibles valeurs de couple, permet notamment d'éliminer les bruits de boîte de vitesses au point mort, à l'arrêt du véhicule concerné, dits ci-après bruits de point mort, notamment à chaud.

Et il appareît que, au moins dans une certaine mesure, il est souhaitable, de ce seul point de vue, que la plage de débattement angulaire au cours de laquelle interviennent ainsi ces moyens élastiques de faible raideur soit aussi étendue que possible.

Mais, ceux-ci sont évidemment très rapidement saturés, pour une faible valeur de couple, dès que, une vitesse étant enclenchée, une action est exercée sur l'accélérateur du véhicule concerné, en vue d'un fonctionnement dit "en tirage" de l'ensemble.

Si l'action sur l'accélérateur est suspendue, le couple entre les deux parties rotatives constitutives du dispositif amortisseur de torsion concerné change de sens, le fonctionnement de l'ensemble devenant alors du type dit "en rétro".

Il en résulte alors un basculement instantané, et bruyant, de l'une de ces parties par rapport à l'autre.

Ce basculement, qui intervient également lors du passage d'un fonctionnement "en rétro" à un fonctionnement "en tirage", correspond au rattrapage de jeu à effectuer entre les deux parties rotatives en question dû à une saturation, d'abord dans un sens, puis dans l'autre, des moyens élastiques de faible raideur intervenant entre elles, et il s'accompagne d'un bruit d'autant plus intense que, d'une part, la plage de débattement angulaire correspondante est importante et que, d'autre part, le rapport de vitesses engagé est court.

Ainsi, deux exigences contradictoires sont à concilier, l'une relative à la mise en oeuvre d'une plage de débattement angulaire dans laquelle n'interviennent, aux valeurs de couple faibles, que des moyens élastiques à action circonférentielle de faible raideur, pour une bonne absorption des bruits de point mort, notamment pour les véhicules à moteur diesel, dont le régime de ralenti est particulièrement bas et les accélérations cycliques particulièrement importantes, l'autre relative au rattrapage de jeu angulaire usuellement lié à une telle plage lors du passage d'un fonctionnement en tirage, accélérateur enfoncé, à un fonctionnement en rétro, accélérateur relâché, et vice versa, un tel rattrapage de jeu angulaire étant lui aussi générateur de bruit, et celui-ci étant d'autant plus important que ladite plage est elle-même plus étendue.

La présente invention a d'une manière générale pour objet une disposition permettant de surmonter cette difficulté.

De manière plus précise, elle a pour objet un dispositif amortisseur de torsion, en particulier friction d'embrayage, du genre comportant au moins deux parties coaxiales montées rotatives l'une par rapport à l'autre, dans les limites d'un dèbattement angulaire déterminé, et à l'encontre de moyens élastiques aptes à agir circonférentiellement entre elles pour une plage au moins dudit débattement angulaire, connu en soi du FR—A—2 197 433 dits ci-après moyens élastiques à action circonférentielle et au moins un organe qui est sensible à la force centrifuge, à l'encontre de moyens de rappel, et qui est ainsi mobile de manière réversible entre une position d'attente et une position de service, afin de modifier le mode d'operation du dispositif, ledit organe étant connu en soi du US—E—27996, caractérisé en ce que ledit organe sensible à la force centrifuge constitue un organe de verrouillage, en ce que, en position d'attente, ledit organe de verrouillage est sans effet et laisse donc une libre capacité d'action aux moyens élastiques à action circonférentielle, et en ce que, en position de service, au-delà d'une vitesse de rotation déterminée liée à ses moyens de rappel, il assure un appui circonférentiel positif d'une desdites parties sur l'autre, pour l'un au moins des sens de rotation, et met donc hors service lesdits moyens élastiques à action circonférentielle, au moins pour une portion de ladite plage de débattement.

Il est certes déjà connu d'associer à un embrayage un quelconque organe sensible à la force centrifuge.

Cette disposition se trouve par exemple décrite dans les brevets français No. 1.113.600 et 1.185.946.

Mais, dans l'un et l'autre de ces brevets, l'organe sensible à la force centrifuge coopère avec un élément extérieur à la friction d'embrayage, en agissant par exemple entre le moyeu de celle-ci et l'un des plateaux entre lesquels est disposé son disque de friction, en pratique le plateau de réaction, ou volant, de l'embrayage.

Suivant l'invention, un tel organe centrifuge intervient au sein même du dispositif amortisseur de torsion, ou friction d'embrayage, concerné, en coopérant avec deux éléments appartenant l'un et l'autre à ce dispositif amortisseur de torsion.

Au point mort, véhicule à l'arrêt, ce dispositif amortisseur de torsion ne tourne qu'à vitesse réduite, et l'organe de verrouillage sensible à la force centrifuge qu'il comporte suivant l'invention est alors sans action: les moyens élastiques à action circonférentielle de faible raideur prévus entre les deux parties rotatives constitutives de ce dispositif interviennent librement entre celles-ci, pour toute la plage de débattement angulaire qui leur est allouée, quelle que soit l'étendue de cette plage.

Par contre, lorsque, véhicule en déplacement, ce dispositif amortisseur de torsion tourne à vitesse suffisante, l'organe de verrouillage suivant l'invention passe de lui-même, sous les effets de la force centrifuge résultant de cette rotation, de sa position rétractée d'attente précédente à sa position déployée de service, et, pour celle-ci, il se trouve circonférentiellement inséré entre deux éléments appartenant chacun respectivement à l'une et à l'autre des parties rotatives constitutives du dispositif.

Par suite, lorsque, par exemple, un relâchement de l'action précédemment exercée sur l'accélérateur conduit au passage d'un fonctionnement "en tirage" à un fonctionnement "en rétro", tout rattrapage de jeu circonférentiel se trouve interdit entre les deux parties rotatives constitutives du dispositif, par l'organe de verrouillage suivant l'invention, jusqu'à ce que, la vitesse de rotation de l'ensemble ayant diminué, celui-ci ait regagné sa position rétractée d'attente, sous l'action des moyens de rappel, en pratique des moyens élastiques, qui lui sont associés à cet effet.

Ainsi tout bruit est évité lors d'un tel passage d'un fonctionnement en tirage à un fonctionnement en rétro, et vise versa, et ceci quelle que soit l'étendue de la plage de débattement angulaire dans laquelle interviennent les moyens élastiques à action circonférentielle de faible raideur pour la position de point mort à l'arrêt.

Par suite, cette plage peut être faite aussi étendue qu'il est nécessaire pour une bonne absorption des bruits de point mort.

Dans le brevet US—E—27 996, il est également mis en oeuvré un organe sensible à la force centrifuge.

Mais le but en est seulement d'éviter, au-delà d'une certaine vitesse de rotation, l'établissement de vibrations de résonance susceptibles de se révéler destructives, et non pas, comme dans la présente demande, de filtrer les vibrations à toutes les vitesses de rotation.

En outre, cet organe sensible à la force centrifuge est une soupape qui, propre à faire communiquer l'un avec l'autre deux milieux différents, comme toutes les soupapes, intervient au sein d'une seule des parties co-axiales du dispositif en cause, et non pas, comme dans la présente, demande, un organe de verrouillage apte à intervenir entre de telles parties co-axiales.

Enfin, dans ce brevet US—E—27 996, les deux parties co-axiales concernées sont d'abord bloquées l'une sur l'autre pour les basses vitesses, puis libérées l'une par rapport à l'autre pour les vitesses plus élevées, alors que c'est exactement l'inverse dans le dispositif objet de la présente demande.

De même, dans le brevet US—A—3 811 545, les ressorts interposés entre les deux parties co-axiales concernées sont empêchés, par frottement sensible à la vitesse centrifuge, d'intervenir aux basses vitesses, et ne sont déverrouillés qu'ensuite, en soter que, ces ressorts ne sauraient être des ressorts de faible raideur du type de ceux intervenant normalement seuls aux faibles couples dans le dispositif objet de la présente demande lorsque l'organe de verrouillage suivant l'invention est en position d'attente.

Dans le brevet FR—A—2 197 433, enfin, il n'existe aucun organe de verrouillage sensible à la force centrifuge.

C'est au contraire un tel organe de verrouillage qui est caractéristique de la présente demande.

Les caractéristiques et avantages de l'invention resortiront d'ailleurs de la description qui va suivre, à titre d'exemple, en référence aux dessins schématiques annexés sur lesquels:

la figure 1 est une vue partielle en élévation, avec un arrachement local, d'un dispositif amortisseur de torsion suivant l'invention, représenté à l'arrêt;

la figure 2 en est une demi-vue en coupe axiale, suivant la ligne II—II de la figure 1;

la figure 3 en est une vue en coupe circonférentielle partielle, suivant la ligne III—III de la figure 2, supposée déployée à plat;

la figure 4 en est une autre vue en coupe circonférentielle partielle, déployée à plat, suivant la ligne IV—IV de la figure 2;

la figure 5 reprend une partie de la figure 1, le dispositif amortisseur de torsion concerné étant supposé en rotation;

la figure 6 est un diagramme illustrant le mode de fonctionnement d'un dispositif amortisseur de torsion de l'art antérieur;

la figure 7 est un diagramme analogue à celui de la figure 6, pour le dispositif amortisseur de torsion suivant l'invention;

la figure 8 est une vue partielle en élévation-coupe, suivant la ligne VIII—VIII de la figure 9, et avec des arrachements locaux, d'une variante de réalisation du dispositif amortisseur de torsion suivant l'invention, représenté à l'arrêt;

la figure 9 en est une vue partielle en coupe axiale, suivant la ligne brisée IX—IX de la figure 8;

la figure 10 reprend pour partie la figure 8, le dispositif amortisseur de torsion concerné étant supposé en rotation;

la figure 11 est une vue en coupe axiale partielle analogue à celle de la figure 9, et concerne une autre variante de réalisation du dispositif amortisseur de torsion suivant l'invention, vu suivant la ligne XI—XI de la figure 12;

la figure 12 en est une vue partielle en élévation-coupe, suivant la ligne XII—XII de la figure 11;

la figure 13 est une vue analogue à celle de la figure 9 et concerne une autre variante de réalisation;

la figure 14 reprend, à échelle supérieure, le détail de la figure 13 repéré par un encart XIV sur celle-ci;

les figures 15 à 18 sont des vues partielles en élévation d'un dispositif amortisseur de torsion suivant l'invention et concernent chacune respectivement une variante de mise en oeuvre de l'invention.

Ces figures illustrent d'une manière générale l'application de l'invention à la constitution d'une friction d'embrayage à moyeu à amortisseur.

Ainsi qu'on le sait, une telle friction d'embrayage comporte globalement un moyeu 10, un voile de moyeu 11 formant radialement une pièce annulaire entourant le moyeu 10, deux rondelles de guidage annulaires 12 qui s'étendent parallement au voile de moyeu 11, autour du moyeu 10, et qui sont solidaires l'une de l'autre, par exemple par des colonnettes axiales 38, et un disque de friction 13 qui, de manière usuelle, porte à sa périphérie, et de part et d'autre de celle-ci, des garnitures de frottement 14.

Dans les divers exemples de réalisation de l'invention représentés sur les figures, le disque de friction 13 est solidaire des rondelles de guidage 12, et celles-ci sont librement rotatives autour du moyeu 10 dans les limites d'un débattement angulaire déterminé.

Ces exemples de réalisation concernent plus particulièrement une friction d'embrayage comportant trois parties coaxiales montées rotatives l'une par rapport à l'autre deux à deux, dans les limites d'un débattement angulaire déterminée, et à l'encontre de moyens élastiques aptes à agir circonférentiellement entre lesdites parties, dits ci-après moyens élastiques à action circonférentielle.

Une telle friction d'embrayage se trouve décrite en détail dans FR—A—2.242.606 ainsi que dans FR—A—2.270.491, addition au précédent.

Une telle friction d'embrayage ne fait pas partie par elle-même de la présente invention; elle ne sera donc pas décrite ici dans tous ses détails, seuls les éléments de cette friction d'embrayage nécessaires à la compréhension de l'invention étant ci-après mentionnés.

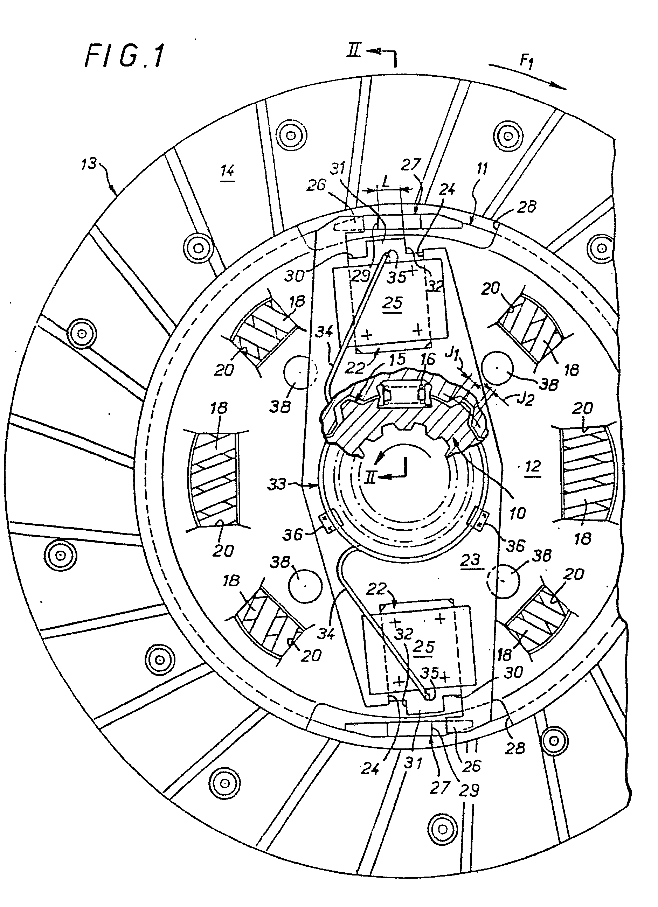

En bref, cette friction d'embrayage comporte une première partie rotative constituée par le moyeu 10, une deuxième partie rotative constituée par le voile de moyeu 11, des moyens d'engrènement à jeu circonférentiel 15 étant prévus entre le moyeu 10 et le voile de moyeu 11, figure 1, et une troisième partie rotative formée conjointement par les rondelles de guidage 12 et le disque de friction 13.

Dans les moyens d'engrènement à jeu 15, et dans les limites du débattement angulaire autorisé par les deux dentures qui les constituent, tel que détaillé ci-après, interviennent les moyens élastiques à action circonférentielle associés aux première et deuxième parties rotatives précisées ci-dessus; il s'agit d'un ou plusieurs ressorts 16, de raideur relativement faible, qui s'étendent sensiblement tangentiellement à une circonférence de l'ensemble, en prenant appui d'une part sur le moyeu 10 et d'autre part sur le voile de moyeu 11, à la faveur de logements formés par des évidements prévus à cet effet dans les dentures de ceux-ci, et qui appartiennent conjointement à un premier étage d'amortissement.

Pour la position de repos représentée à la figure 1, des jeux angulaires J1, J2 subsistent entre les deux dentures formant les moyens d'engrènement à jeu 15, de part et d'autre de celles-ci; ce sont ces jeux angulaires J1, J2 qui définissent conjointement le débattement angulaire autorisé entre les parties rotatives en cause.

Dans l'exemple de réalisation représenté sur les figures 1 à 7, le jeu angulaire J1 correspondant à un fonctionnement en tirage de la friction, pour lequel le sens de rotation du disque de friction 13, et donc du voile de moyeu 11, est supposé être celui repéré par la flèche F1 à la figure 1, est supérieur au jeu angulaire J2 correspondant à un fonctionnement en rétro; il n'en est pas obligatoirement ainsi.

Entre le voile de moyeu 11 et les rondelles de guidage 12 interviennent les moyens élastiques à action circonférentielle prévus entre les deuxième et troisième parties rotatives précisées ci-dessus; il s'agit de ressorts 18, de forte raideur, qui s'étendent sensiblement tangentiellement à une circonférence de l'ensemble, en étant chacun logés pour partie dans une fenêtre 19 du voile de moyeu 11 et pour partie dans une fenêtre 20 de chaque rondelle de guidage 12, et qui appartiennent conjointement à un deuxième étage d'amortissement.

En pratique, et suivant des dispositions décrites en détail dans les brevets français mentionnés ci-dessus, pour certains au moins de ces ressorts 18, le développement circonférentiel des fenêtres 19 du voile de moyeu 11, est différent de celui des fenêtres 20 des rondelles de guidage 12, en sorte que l'intervention de ces ressorts 18 s'en trouve retardée; par exemple, et c'est le cas dans l'exemple de réalisation représenté, les ressorts 18 peuvent être répartis en trois groupes distincts, et l'intervention de ces groupes de ressorts être échelonnée tout au long du débattement angulaire possible entre les rondelles de guidage 12 et le voile de moyeu 11, seul un premier de ces groupes de ressorts intervenant au début de ce débattement, avant que s'y adjoignent le deuxième puis le troisième.

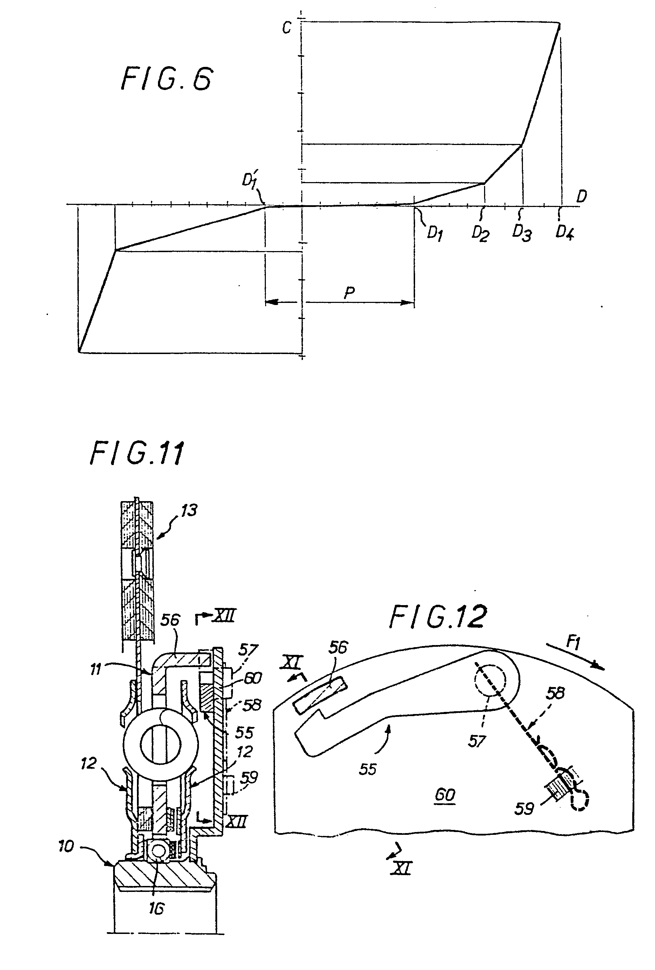

Le diagramme de la figure 6, sur lequel est rapporté en abscisses le débattement angulaire D, et en ordonnées le couple C, illustre le fonctionnement de la friction d'embrayage à moyeu amortisseur succinctement décrite ci-dessus, lorsqu'un couple est appliqué au disque de friction 13, suivant la flèche F1 de la figure 1, et est transmis par celui-ci au moyeu 10.

Pour les faibles valeurs de ce couple, et c'est le cas au point mort, véhicule à l'arrêt, seuls interviennent les ressorts 16 du premier étage d'amortissement, pour élimination des bruits de point mort correspondants.

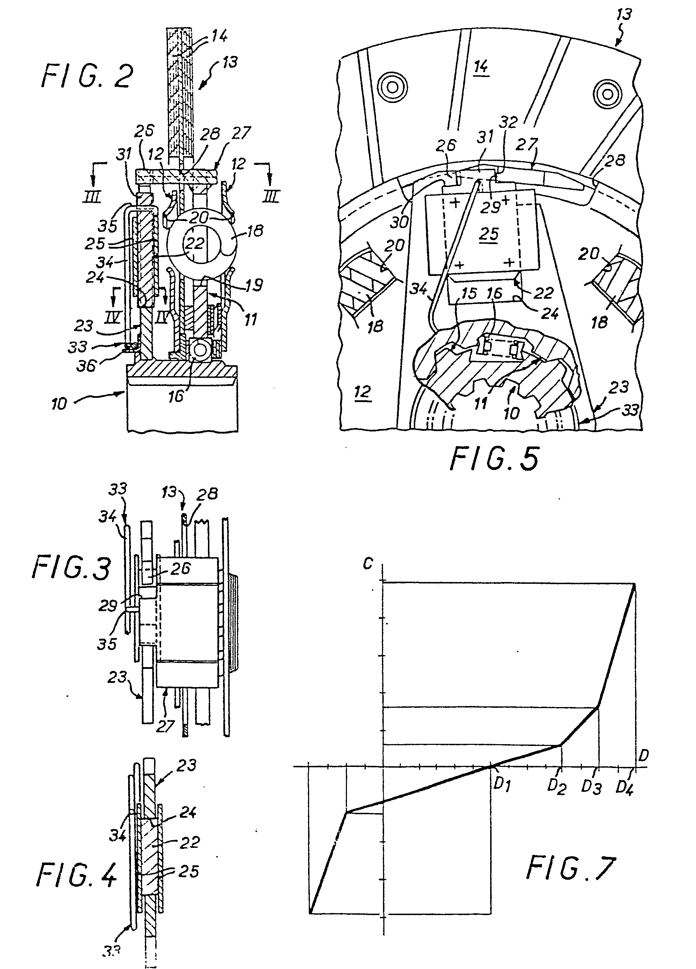

Dès que, pour un fonctionnement en tirage, le couple augmente, ce premier étage d'amortissement se trouve saturé, et, par les moyens d'engrènement 15, le jeu angulaire J1 étant absorbé, le voile de moyeu 11 vient en prise directe avec le moyeu 10, figure 5, pour une valeur D1 du débattement correspondant à ce jeu angulaire J1.

Entrent alors en action le premier groupe des ressorts 18, puis, successivement, pour des valeurs D2, D3 du débattement, le deuxième et le troisième de ces groupes, jusqu'à saturation du deuxième étage d'amortissement formé conjointement par ces trois groupes de ressorts, ce qui correspond alors à la valeur finale D4 dudit débattement.

Pour un fonctionnement en rétro, un processus analogue se développe, avec la réserve que, dans l'exemple de réalisation représenté, les deuxième et troisième groupes des ressorts 18 entrent alors simultanément en action; ils pourraient bien entendu entrer successivement en action, comme précédemment.

Globalement, les ressorts 16 du premier étage d'amortissement agissent ainsi dans une zone de filtration des bruits de point mort P allant du débattement angulaire D1 en tirage, à un débattement angulaire D'1 en rétro.

Bien entendu, et pour une simplification du diagramme de la figure 6, il n'est pas tenu compte ici du phénomène d'hystérésis se développant conjointement en raison des frottements internes de la friction.

Suivant l'invention, à une telle friction d'embrayage à moyeu amortisseur comportant au moins deux parties coaxiales montées rotatives l'une par rapport à l'autre, dans les limites d'un débattement angulaire déterminé, et à l'encontre de moyens élastiques à action circonférentielle intervenant entre elles pour une plage au moins dudit débattement, il est incorporé un organe de verrouillage, qui est sensible à la force centrifuge, à l'encontre de moyens de rappel, et qui est ainsi mobile de manière réversible entre une position rétractée d'attente, pour laquelle il est sans effet et laisse donc une libre capacité d'action aux moyens élastiques à action circonférentielle, et une position déployée de service pour laquelle, au-delà d'une vitesse de rotation déterminée liée à ces moyens de rappel, il assure un appui circonférentiel positif d'une desdites parties sur l'autre, pour l'un au moins des sens de rotation, et met donc hors service lesdits moyens élastiques à action circonférentielle, pour une portion au moins de ladite plage de débattement.

Dans les divers exemples de réalisation représentés sur les figures, un tel organe de verrouillage est prévu entre la première partie, que forme le moyeu 10, et la deuxième partie que forme le voile de moyeu 11.

En pratique, deux organes de verrouillage sont prévus, en positions diamétralement opposées l'un par rapport à l'autre.

Dans l'exemple de réalisation représenté sur les figures 1 à 5, il s'agit de simples plaquettes 22.

Pour leur maintien et leur guidage, l'une des parties concernées, le moyeu 10 dans l'exemple représenté, porte radialement un flasque 23, qui en est solidaire en rotation, ce flasque étant par exemple engagé à force sur le moyeu 10 et serti sur celui-ci, suivant une technique qui est connue en elle-même, et qui ne sera donc pas décrite en détail ici.

Il va de soi cependant que le flasque 23 pourrait être rapporté sur le moyeu 10 par tout autre moyen.

Ce flasque 23 comporte deux guides qui sont allongés radialement, et avec chacun desquels est en prise une plaquette 22.

Dans l'exemple de réalisation représenté, un tel guide est simplement constitué par un évidement 24 du flasque 23 et la plaquette 22 correspondante est simplement montée coulissante dans un tel évidement 24.

Pour le maintien axial d'une plaquette 22, deux lamelles 25 sont rapportées sur celle-ci, par exemple par soudage, de part et d'autre du flasque 23, et ces lamelles 25 débordent circonférentiellement de l'évidement 24 correspondant, figures 1 et 4.

A l'extrémité de chaque évidement 24, le flasque 23 présente un bec de retenue 26, qui fait saillie circonférentiellement dans ledit évidement 24, figures 1 et 5.

Conjointement, l'autre des parties rotatives concernées, le voile de moyeu 11 dans l'exemple de réalisation représenté, porte, en correspondance avec chaque bec de retenue 26 du flasque 23, une patte 27, qui s'étend axialement en direction de ce flasque, à la faveur d'un passage 28 du disque de friction 13, et qui se prolonge axialement suffisamment pour interférer avec le trajet de la plaquette 22 correspondante dans l'évidement 24 dans lequel elle peut coulisser.

Au-delà d'un épaulement 30 propre à coopérer en butée avec le bec de retenue 26 correspondant, chaque plaquette 22 comporte un prolongement radial 31 susceptible d'être pincé circonférentiellement entre ce bec de retenue 26 et la patte axiale 27 correspondante.

En pratique, pour la position de repos représentée à la figure 1, le développement circonférentiel L entre, d'une part, la tranche latérale 29 d'une patte 27 la plus proche, circonférentiellement, du bec de retenue 26 correspondant, et, d'autre part, la tranche latérale 32 du prolongement radial 31 de la plaquette 22 correspondante la plus éloignée, circonférentiellement, de ce bec de retenue 26, correspond au plus, angulairement, au jeu angulaire J1 défini ci-dessus.

Et, bien entendu, chaque bec de retenue 26 a un développement circonférentiel suffisamment réduit pour ne pas s'opposer à une engagement, en regard de sa propre tranche latérale, du prolongement radial 31 de la plaquette 22 correspondante.

Dans l'exemple de réalisation représenté, les deux plaquettes 22 ont en commun les moyens de rappel qui leur sont associés, et ceux-ci sont constitués par un ressort de torsion 33, dont les spires entourent le moyeu 10, et dont les branches 34 sont chacune respectivement en prise, par un retour axial 35, avec les plaquettes 22, un tel retour 35 étant engagé dans un passage prévu à cet effet dans une telle plaquette et replié à son extrémité au-delà de celui-ci.

A la périphérie interne de la partie médiane de torsion du ressort 33, des plaquettes en équerre 36 sont rapportées de place en place, par exemple par soudure, sur le flasque 23, pour un maintien convenable de ce ressort de torsion.

Chaque plaquette 22 constitue une massellotte sensible à la force centrifuge.

Le ressort 33 qui en forme les moyens de rappel est établi de manière à ce que, à l'arrêt, figures 1 à 4, chaque plaquette 22 occupe une position rétractée d'attente, en appui contre le fond de l'évidement 24 correspondant du flasque 23, pour laquelle elle est sans effet; le ressort 33 est en outre taré de manière à maintenir les plaquettes 22 dans une telle position rétractée d'attente tant que la vitesse de rotation de la friction demeure inférieure à une valeur déterminée, de l'ordre par exemple de 900 tours/mn, et à ne céder qu'au-delà de cette vitesse.

Dès lors, pour une vitesse de rotation inférieure à 900 tours/mn, le diagramme représentatif du fonctionnement de la friction demeure celui de la figure 6; les ressorts 16 du premier étage d'amortissement ont une libre capacité d'action.

Il n'en est plus de même au-delà de 900 tours/mn, dès que les ressorts 16 sont saturés, et donc que, le jeu angulaire J1 étant absorbé, les pattes axiales 27 se sont en conséquence circonférentiellement déplacées, vis-à-vis des becs de retenue 26, d'un angle correspondant au moins à ce jeu, laissant ainsi un libre passage aux prolongements 31 des plaquettes 22.

En effet, sous les effets de la force centrifuge, les plaquettes 22 formant les organes de verrouillage suivant l'invention viennent alors occuper une position déployée de service pour laquelle, en raison du déplacement circonférentiel précisé ci-dessus pour les pattes axiales 27, elles sont radialement en butée par leurs épaulements 30 contre ces becs de retenue 26, et ont leurs prolongements 31 circonférentiellement insérés entre ceux-ci et ces pattes axiales 27, figure 5.

Dès lors, si par relâchement de l'action d'enfoncement précédemment exercée sur l'accélérateur du véhicule concerné, le fonctionnement de l'ensemble passe d'un mode de fonctionnement en tirage à un mode de fonctionnement en rétro, les pattes axiales 27 viennent porter sur les prolongements 31 des plaquettes 22, et le voile de moyeu 11 trouve ainsi un appui circonférentiel positif sur le moyeu 10, à travers les pattes axiales 27, les prolongements 31 des plaquettes 22, ces plaquettes 22 et le flasque 23, sans qu'il y ait un quelconque débattement angulaire inverse entre ce voile de moyeu 11 et le moyeu 10, et donc sans qu'il y ait production d'un quelconque bruit.

Autrement dit, les ressorts 16 se trouvent alors mis hors service.

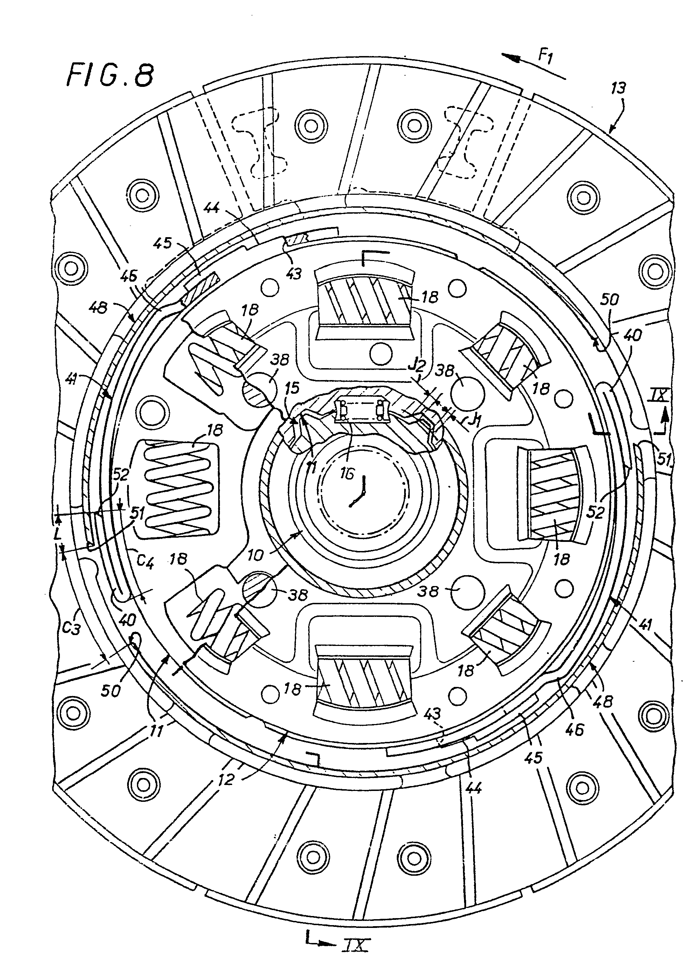

Dans le diagramme représentatif du fonctionnement correspondant, figure 7, la zone de filtration des bruits de point mort dus à ces ressorts 16 se trouve éliminée.

Tout se passe donc comme si seuls intervenaient alors, pour la filtration des bruits de tirage ou de rétro, les ressorts 18 du deuxième étage d'amortissement de la friction.

Si le développement circonférentiel L précisé ci-dessus correspond exactement au jeu angulaire J1, la mise hors service des ressorts 16 en rétro se fait au point d'abscisse D1; si ce développement circonférentiel L correspond angulairement à une valeur inférieure à celle du jeu angulaire J1, elle se fait pour un point d'abscisse inférieure à celle du point D1.

Tel que représenté, un jeu peut subsister circonférentiellement entre le prolongement radial 31 de chacune des plaquettes 22 et le bec de retenue 26 correspondant, l'appui de ces plaquettes 22 sur le flasque 23 se faisant par leur tranche latérale correspondante, dans les évidements 24 du flasque 23; en variante les prolongements 31 des plaquettes 22 peuvent porter circonférentiellement sur les becs de retenue 26, ceux-ci ayant alors une double fonction d'appui circonférentiel et de retenue radiale.

Bien entendu, dès que la vitesse de rotation de la friction tombe en dessous de 900 tours/mn, le ressort 33 rappelle les plaquettes 22 en position rétractée d'attente, et les ressorts 16 sont à nouveau en mesure de déployer leurs effets.

Dans la variante de réalisation illustrée par les figures 8 à 10, deux organes de verrouillage 40 sont comme précédemment mis en oeuvre, en positions diamétralement opposées, pour éviter toute réaction intempestive sur l'axe de l'ensemble.

Mais, suivant cette variante de réalisation, chacun de ces organes de verrouillage 40 est porté par un bras élastiquement déformable 41, qui s'étend circonférentiellement, et qui, à distance d'un tel organe de verrouillage 40, est solidaire d'une des premières parties constitutives de la friction, un tel bras élastiquement déformable 41 constituant par ailleurs par lui-même les moyens de rappel associés à l'organe de verrouillage 40 qu'il porte.

Dans l'exemple de réalisation représenté, la partie de la friction d'embrayage concernée qui porte ainsi les organes de verrouillage 40 est celle constituée par le voile de moyeu 11, chaque bras élastiquement déformable 41 étant, à son extrémité opposée à l'organe de verrouillage 40 qu'il porte, ancré au voile de moyeu 11, à la périphérie de celui-ci.

Dans l'exemple de réalisation représenté, un tel bras élastiquement déformable 41 est formé par une lame métallique de section relativement mince radialement et relativement alongée axialement, mais il va de soi qu'en variante une telle lame pourrait être de section relativement mince axialement et relativement allongée circonférentiellement.

L'organe de verrouillage 40 correspondant est formé, dans l'exemple de réalisation représenté, par un simple repli sur lui-même, en U, du bras élastiquement déformable 41 qui le porte, ce repli étant effectué du côté de ce bras radialement le plus éloigné de l'axe de l'ensemble.

Pour sa solidarisation à la partie de la friction qui le porte, et donc au voile de moyeu 11 dans l'exemple de réalisation représenté, un tel bras élastiquement déformable 41 est, dans l'exemple de réalisation représenté, simplement engagé par une boutonnière 43 sur une patte 44 dudit voile de moyeu 11, ladite patte s'étendant radialement et se prolongeant par un talon de retenue 45 qui s'étend circonférentiellement pour partie en porte-à-faux à compter d'elle, en direction de l'organe de verrouillage 40 correspondant, et qui a un développement circonférentiel C1 sensiblement égal à celui de celle-ci.

Le développement circonférentiel C2 de la boutonnière 43 du bras élastiquement déformable 41 est légèrement supérieur à un tel développement circonférentiel C1 de la patte 44 et du talon de retenue 45 correspondant, ce qui permet sa mise en place par simple engagement : dans un premier temps le bras élastiquement déformable 41 est présenté radialement par sa boutonnière 43 sur le talon de retenue 45 puis, après franchissement de celui-ci, il est légèrement basculé en direction de l'axe de l'ensemble de manière à pouvoir être engagé sous ce talon de retenue 45, et, enfin, il est déplacé circonférentiellement sous celui-ci jusqu'à pouvoir venir être engagé radialement sur la patte 44.

Son maintien est dès lors assuré, la distance radiale séparant le talon de retenue 45 de la tranche périphérique du voile de moyeu 11 n'étant que légèrement supérieure à son épaisseur.

De surcroît, pour la configuration de repos de la friction, l'extrémité libre du bras élastiquement déformable 41 portant l'organe de verrouillage 40 correspondant se trouve élastiquement plaquée contre la partie qui le porte, et donc, en l'espèce, contre la tranche périphérique du voile de moyeu 11, en sorte que, pour la configuration de repos de la friction, un tel bras élastiquement déformable est sous précontrainte élastique.

Au voisinage du talon de retenue 45, le bras élastiquement déformable 41 présente, dans l'exemple de réalisation représenté, une déformation 46 qui l'écarte localement de cette tranche périphérique du voile de moyeu 11.

Pour coopération avec chacun des organes de verrouillage 40, une couronne 48 est associée à la deuxième des parties coaxiales de la friction d'embrayage concernée, à savoir, dans l'exemple de réalisation représenté, celle formée par le moyeu 10.

En pratique, dans cet exemple de réalisation, cette couronne 48 est portée par un flasque transversal annulaire 49, et celui-ci est par exemple rapporté par sertissage sur le moyeu 10, tel que représenté, comme le flasque 23 précédent.

Ainsi qu'on le notera, ce flasque annulaire 49, qui est relativement peu épais, est, dans l'exemple de réalisation représenté, disposé à l'extérieur du volume formé par les rondelles de guidage.

De ce fait, et compte tenu également du fait que les organes de verrouillage 40 et les bras élastiquement déformables 41 qui les portent n'augmentent en rien l'encombrement axial du dispositif amortisseur de torsion concerné, il résulte que celui-ci peut plus aisément convenir à des applications pour lesquelles le dispositif amortisseur de torsion décrit en référence aux figures 1 à 5 serait axialement plus difficele à implanter.

Pour coopération avec chaque organe de verrouillage 40, la couronne 48 présente une échancrure 50, dont le développement circonférentiel C3 est largement supérieur à celui C4 d'un tel organe de verrouillage.

Dans l'exemple de réalisation représenté, celui, 51, des bords axiaux d'une telle échancrure 50 qui est destiné à coopérer avec l'organe de verrouillage 40 correspondant est biseauté, et la tranche correspondante 52 de cet organe de verrouillage 40 est elle-même biseautée de manière complémentaire.

Comme précédemment, pour la configuration de repos de la friction, tel que représenté à la figure 8, le développement circonférentiel L entre la tranche 52 d'un organe de verrouillage 40 et le bord axial 51 de l'échancrure correspondante 50 de la couronne 48 correspond au plus au jeu angulaire J1 précisé ci-dessus.

En l'absence des organes de verrouillage 40, la courbe représentative du fonctionnement de la friction d'embrayage concernée serait, comme précédemment, celle du diagramme de la figure 6.

Lorsque, comme c'est le cas en l'espèce, des organes de verrouillage 40 sont présents, les ressorts de faible raideur 16 continuent à agir dans la zone de filtration des bruits de point mort P tant que la vitesse de rotation de la friction demeure faible, et est par exemple inférieure à une valeur de l'ordre de 900 à 1 100 tours/mn : en dessous d'une telle valeur, les organes de verrouillage 40 sont sans effet et ils laissent donc leur libre capacité d'action aux ressorts de faible raideur 16.

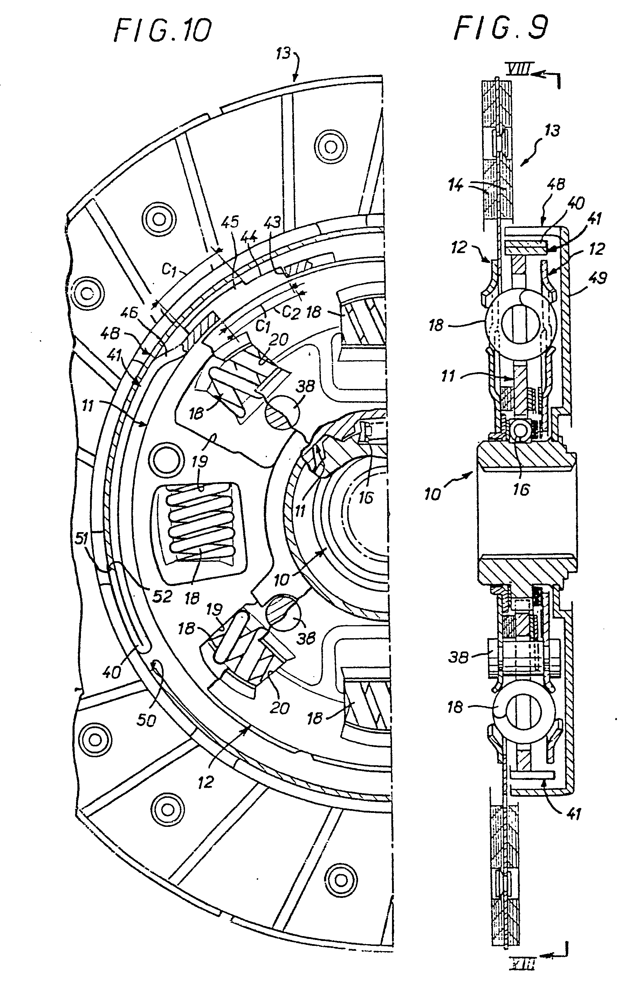

Par contre, au-delà de 900 à 1 100 tours/m, les organes de verrouillage 40 passent, sous les effets de la force centrifuge, de leur position rétractée d'attente, pour laquelle l'extrémité libre des bras élastiquement déformables 41 qui les porte est au contact de la tranche périphérique du voile de moyeu 11, figure 8, à une position déployée de service pour laquelle ladite extrémité libre des bras élastiquement déformables 41 est écartée de ladite tranche périphérique de voile de moyeu 11, figure 10.

Dès lors, et dès que le débattement angulaire entre les deux parties constitutives de la friction atteint une valeur suffisante, correspondant per exemple à l'absorption du jeu angulaire J1 marquant la saturation des ressorts de faible raideur 16, chaque organe de verrouillage 40 s'engage dans l'échancrure 50 correspondante de la couronne 48, cette échancrure se trouvant alors radialement à son niveau, figure 10.

Si le fonctionnement continue à être un fonctionnement en tirage, c'est-à-dire si le couple à transmettre entre les parties constitutives de la friction continue à croître, le débattement angulaire entre les parties constituées respectivement par le moyeu 10, d'une part, et les rondelles de guidage 12 et le disque de friction 13, d'autre part, continue à se déployer, ce débattement angulaire se déployant en fait alors entre le voile de moyeu 11 d'une part, et les rondelles de guidage 12 et le disque de friction 13, d'autre part, jusqu'à sa valeur finale D4, suivant la processus décrit ci-dessus.

Par contre, si, par relâchement de l'action d'enfoncement précédemment exercée sur l'accélérateur du véhicule concerné, le fonctionnement de l'ensemble passe d'un tel fonctionnement en tirage à un fonctionnement en rétro, et que, dès lors, la partie de la friction constituée par le moyeu 10 connaît un mouvement angulaire relatif rétrograde vis-à-vis de la partie de cette friction constituée par le voile de moyeu 11, chaque organe de verrouillage 40 vient se crocheter par sa tranche biseautée 52 sur le bord biseauté 51 de l'échancrure 50 correspondante de la couronne 48, et lesdits organes de verrouillage 40 assurent alors conjointement un appui circonférentiel positif d'une desdites parties sur l'autre, pour le sens de rotation concerné, en mettant dans ce cas hors service les ressorts de faible raideur 16.

La courbe représentative du fonctionnement de la friction est alors celle du diagramme de la figure 7, dont toute plage de filtration due aux ressorts de faible raideur 16 se trouve éliminée.

Bien entendu, il en demeure ainsi tant que la vitesse de rotation de la friction est supérieure à la valeur de 900 à 1 100 tours/mn précisée ci-dessus.

Dès qu'elle retombe en dessous de cette valeur, les bras élastiquement déformables 41 rappellent les organes de verrouillage 40 en position rétractée d'attente.

Ainsi qu'on le notera, lorsque la vitesse de rotation de la friction est suffisante, les organes de verrouillage 40 viennent, pour les faibles valeurs de couple, porter contre la couronne périphérique 48.

Par suite, ils interviennent dans le frottement interne de la friction, en raison de leur déplacement relatif vis-à-vis de la couronne 48 au contact de laquelle ils se trouvent alors, et participent donc à l'hystérésis de la friction.

Suivant un développement de l'invention, il est tiré partie d'une telle intervention, en l'accentuant, et, à cet effet, chaque organe de verrouillage 40 est, sur sa face tournée vers la couronne 48, munie d'une garniture de frottement (non représenté sur les figures).

En variante, la couronne 48 est, sur sa face intérieure tournée vers les organes de verrouillage 40, munie d'une telle garniture de frottement (également non représenté sur les figures).

L'hystérésis ainsi due aux organes de verrouillage 40 est fonction de la vitesse, et elle se

**0 015 203**

trouve mise hors circuit lorsque, le débattement angulaire entre les parties en cause étant suffisant, un tel organe de verrouillage s'engage dans l'échancrure 50 correspondante de la couronne 48.

Suivant une variante non représentée, un hystérésis peut également être obtenue entre les bras élastiquement déformables 41 et la couronne 48.

Anisi qu'il est aisé de le comprendre, le biseautage de la tranche 52 des organes de verrouillage 40 et celui, complémentaire, du bord 51 des échancrures 50 de la couronne 48 sont favorables à un bon crochetage, en rétro, desdits organes de verrouillage sur ladite couronne, sand décrochement intempestif.

La déformation 46 des bras élastiquement déformables 41 portant ces organes de verrouillage 40 agit dans le même sens.

Dans l'exemple de réalisation représenté sur les figures 8 à 10, les bras élastiquement déformables 41 portant les organes de verrouillage 40 sont solidiares du voile de moyeu 11, tandis que le flasque transversal 49 portant la couronne 48 est solidaire du moyeu 10.

Il va de soi qu'une disposition inverse pourrait être adoptée, les bras élastiquement déformables 41 étant portés par le flasque 49, et la couronne 48 par le voile de moyeu 11, les rôles respectifs de deux parties coaxiales rotatives que constituent le moyeu 10 et le voile de moyeu 11 étant dans un tel cas inversés.

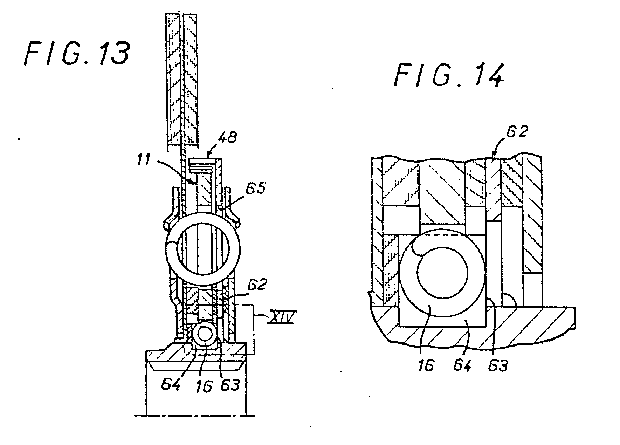

C'est le cas, d'ailleurs, dans la variante de réalisation illustrée par les figures 11 et 12 suivant laquelle, d'une part, l'organe de verrouillage 55 est un cliquet monté rotatif sur un flasque 60, constituant avec la moyeu 10 sur lequel il est rapporté une première partie, et, d'autre part, le voile de moyeu 11, formant une deuxième partie associée à la précédente, comporte, pour coopération avec l'organe de verrouillage 55, une patte 56 qui s'étend axialement, et qui interfère avec le trajet de rotation de l'organe de verrouillage 55 autour de son axe.

Comme le flasque 23 précédent, le flasque 60 dans ce cas est un flasque allongé diamétralement et non plus un flasque annulaire.

En pratique, dans l'exemple de réalisation représenté, l'axe de rotation de l'organe de verrouillage 55 qui est désigné par la référence générale 57, s'étend parallèlement à l'axe de l'ensemble.

Il est traversé par une épingle 58, qui, agrafée sur le flasque 60 à l'occasion d'un crevé 59 de celui-ci, constitue les moyens élastiques de rappel associés à l'organe de verrouillage 55.

Celui-ci a, en pratique, une configuration en crochet, pour son crochetage, en fonctionnement en rétro, sur la patte 56 associée, lorsque, la vitesse de rotation de la friction étant suffisante, il a pivoté en conséquence autour de son axe 57 sous les effets de la force centrifuge.

Le fonctionnement de cette variante de réalisation est analogue à celui décrit ci-dessus : au-delà d'une vitesse de l'ordre de 900 à 1 100 tours/mn, les ressorts de faible raideur 16 sont mis hors service.

Dans les variantes de réalisation illustrées par les figures 13 à 18, le flasque 62 à mettre en oeuvre est disposé dans le volume interne aux rondelles de guidage 12, entre l'une de celles-ci, en pratique celle la plus éloignée du disque de friction 13, et le voile de moyeu 11.

Ainsi qu'il est mieux visible à la figure 14, un tel flasque 62 est serti sur le moyeu 10, au contact de l'épaulement transversal 63 que forme la denture 64 de celui-ci.

Pour son engagement sur les ressorts 18, le flasque 62 présente des fenêtres 65, et celles-ci ont chacune un développement circonférentiel suffisamment grand pour ne pas interférer avec le ressort 18 correspondant.

Dans la forme de réalisation illustrée par les figures 13 et 14, le flasque 62 est un flasque annulaire, portant à sa périphérie une couronne 48, pour coopération avec des organes de verrouillage 40 du type de ceux décrits en référence aux figures 8 à 10, c'est-à-dire des organes de verrouillage disposés en bout de bras élastiquement déformables 41, qui sont portés par le voile de moyeu 11 et qui s'étendent circonférentiellement, une disposition inverse pouvant être d'ailleurs adoptée, comme mentionné précédemment.

Bien entendu, la présente invention ne se limite pas aux formes de réalisation décrites et représentées.

Par exemple, s'agissant de la forme de réalisation illustrée par les figures 8 à 10, l'organe de verrouillage 40, au lieu d'être formé par un repli du bras élastiquement déformable 41 qui le porte, peut être formé par une plaquette rapportée, par exemple par rivetage, sur un tel bras.

En outre, les rôles respectifs des deux parties coaxiales rotatives entre lesquelles intervient l'organe de verrouillage suivant l'invention peuvent être intervertis, comme déjà précisé ci-dessus.

De plus, des dispositions du type de celles à rondelle de frottement munie d'un moyen de denture décrites dand FR—A—2.386.729 peuvent être adoptées.

Par ailleurs, des moyens de frottement peuvent, au moins dans certaines applications particulières, être associés à l'organe de verrouillage suivant l'invention, en vue d'introduire une "hystérésis" dans son intervention, c'est-à-dire un retard, au moins pour le retour en position rétractée d'attente.

De plus, si, dans ce qui précède, l'organe de verrouillage mis en oeuvre intervient lors du passage d'un mode de fonctionnement en tirage à un mode de fonctionnement en rétro, il pourrait aussi bien intervenir lors d'un passage d'un mode de fonctionnement en rétro à un mode de fonctionnement en tirage.

Par ailleurs, l'invention s'applique aussi bien aux dispositifs amortisseurs de torsion dans lesquels, deux moyeux concentriques étant prévus avec des moyens d'engrènement à jeu entre eux, les rondelles de guidage sont solidaires du moyeu le plus extérieur, tandis que le disque de friction est solidaire du voile de moyeu, et que celui-ci est librement rotatif vis-à-vis de l'ensemble, des moyens élastiques à action circonférentielle étant interposés entre lui et lesdites rondelles de guidage.

Enfin, le domaine d'application de l'invention n'est pas limité à celui des frictions d'embrayage pour véhicule automobile, mais s'étend à celui de tout autre dispositif amortisseur de torsion.

## Revendications

1. Dispositif amortisseur de torsion, en particulier friction d'embrayage, du genre comportant au moins deux parties coaxiales montées rotatives l'une par rapport à l'autre, dans les limites d'un débattement angulaire déterminé, et à l'encontre de moyens élastiques aptes à agir circonférentiellement entre elles pour une plage au moins dudit débattement angulaire, dits ci-après moyens élastiques à action circonférentielle et au moins un organe qui est sensible à la force centrifuge, à l'encontre de moyens de rappel, et qui est ainsi mobile de manière réversible entre une position d'attente et une position de service, afin de modifier le mode d'opération du dispositif, caractérisé en ce que ledit organe sensible à la force centrifuge constitue un organe de verrouillage (22, 40, 55, 66, 74), en ce que, en position d'attente, ledit organe de verrouillage (22, 40, 55, 66, 74) est sans effet et laisse donc une libre capacité d'action aux moyens élastiques à action circonférentielle (16), et en ce que, en position de service, au-delà d'une vitesse de rotation déterminée liée à ses moyens de rappel, il assure un appui circonférentiel positif d'une desdites parties (10, 11) sur l'autre, pour l'un au moins des sens de rotation, et met donc hors service lesdits moyens élastiques à action circonférentielle (16), au moins pour une portion de ladite plage de débattement.

2. Dispositif amortisseur de torsion suivant la revendication 1, caractérisé en ce que l'une desdites parties (10, 11) porte un guide (24), avec lequel l'organe de verrouillage (22) est en prise, et l'autre desdites parties (10, 11) comporte une patte (27), qui s'étend axialement et qui interfère avec le trajet de l'organe de verrouillage (22) le long de son guide (24).

3. Dispositif amortisseur de torsion suivant la revendication 2, caractérisé en ce que l'organe de verrouillage (22) est constitué par une simple plaquette, et son guide (24) est constitué par un évidement allongé radialement, qui est formé dans un flasque (23) solidaire de la partie (10, 11) concernée, et dans lequel ledit organe de verrouillage (22) est monté coulissant.

4. Dispositif amortisseur de torsion suivant la revendication 3, caractérisé en ce que ledit flasque (23) présente, à l'extrémité de l'evidement (24) formant le guide de l'organe de verrouillage (22), un bec de retenue (26) qui fait saillie dans ledit évidement (24), et, audelà d'un épaulement (30) propre à coopérer radialement en butée contre ledite bec de retenue (26), ledit organe de verrouillage (22) comporte un prolongement radial (31) sur lequel est susceptible de venir porter la patte axiale (27) de l'autre partie (10, 11).

5. Dispositif amortisseur de torsion suivant l'une quelconque des revendications 2 à 4, caractérisé en ce que deux organes de verrouillage (22) sont prévus en positions diamétralement opposées, et ces deux organes de verrouillage (22) ont en commun leurs moyens de rappel, lesdits moyens de rappel étant constitués par un ressort de torsion (33), et les deux branches (34) de celui-ci étant chacune respectivement attelées aux deux organes de verrouillage (22).

6. Dispositif amortisseur de torsion suivant l'une quelconque des revendications 3 à 5, dans lequel l'une des parties (10, 11) constitue un moyeu, caractérisé en ce que le flasque (23) comportant un évidement (24) formant guide pour l'organe de verrouillage (22) est solidaire de ce moyeu (10).

7. Dispositif amortisseur de torsion suivant la revendication 6, dans lequel l'autre partie (11) est un voile de moyeu annulaire monté rotatif autour dudit moyeu (10), caractérisé en ce que la patte axiale (27) prévue sur cette partie (11) pour coopération avec l'organe de verrouillage (22) est directement solidaire dudit voile de moyeu (11).

8. Dispositif amortisseur de torsion suivant la revendication 1, caractérisé en ce que l'organe de verrouillage (40) est porté par un bras (41), qui s'étend circonférentiellement, et qui, à distance de l'organe de verrouillage (40), est solidaire d'une première desdites parties (10, 11), ledit bras (41) constituant par lui-même les moyens de rapell dudit organe de verrouillage (40).

9. Dispositif amortisseur de torsion suivant la revendication 8, caractérisé en ce que le bras (41) est formé par une lame de section relativement mince radialement et relativement allongée axialement.

10. Dispositif amortisseur de torsion suivant l'une quelconque des revendications 7, 8, caractérisé en ce que l'organe de verrouillage (40) est formé par un simple repli sur lui-même du bras (41) qui le porte.

11. Dispositif amortisseur de torsion suivant l'une quelconque des revendications 7 à 10, caractérisé en ce que, pour sa solidarisation à la partie (10, 11) qui le porte, le bras (41) est simplement engagé par une boutonnière (43) sur une patte (44) de ladite partie (10, 11), qui s'étend radialement, et qui se prolonge par un talon de retenue (45), ledit talon de retenue

(45) s'étendant circonférentiellement pour partie en porte-à-faux à compter de ladite patte (44) et ayant un développement circonférentiel sensiblement égal à celui de celle-ci.

12. Dispositif amortisseur de torsion suivant l'une quelconque des revendications 7 à 11, caractérisé en ce que, pour coopération avec l'organe de verrouillage, une couronne (48) est associée à la deuxième des parties (10, 11) concernées, cette couronne (48) étant établie transversalement au droit de l'organe de verrouillage (40), au-delà de celui-ci, et étant solidaire en rotation de ladite deuxième partie (10, 11) pour une portion au moins du débattement angulaire possible entre elle et la première partie.

13. Dispositif amortisseur de torsion suivant la revendication 12, caractérisé en ce que la couronne (48) est portée par un flasque (49, 62) solidaire de ladite deuxième partie (10, 11).

14. Dispositif amortisseur de torsion suivant l'une quelconque des revendications 12 et 13, caractérisé en ce que, pour coopération avec l'organe de verrouillage (40), la couronne (48) associée à la deuxième partie (10, 11) présente au moins une échancrure (50).

15. Dispositif amortisseur de torsion suivant la revendication 14, caractérisé en ce que le bord (51) de ladite échancrure (50) est biseauté.

16. Dispositif amortisseur de torsion suivant la revendication 15, caractérisé en ce que la tranche correspondante (52) de l'organe de verrouillage (40) est ellemême biseautée de manière complémentaire.

17. Dispositif amortisseur de torsion suivant l'une quelconque des revendications 8 à 16, caractérisé en ce que, entre l'organe de verrouillage (40) et la couronne (48) associée intervient une garniture de frottement.

18. Dispositif amortisseur de torsion suivant l'une quelconque des revendications 8 à 17, caractérisé en ce que le bras (41) portant l'organe de verrouillage (40) est élastiquement déformable.

19. Dispositif amortisseur de torsion suivant la revendication 18, caractérisé en ce que, pour la configuration de repos du dispositif, le bras élastiquement déformable (41) portant l'organe de verrouillage (40) est sous précontrainte élastique.

20. Dispositif amortisseur de torsion suivant la revendication 1, caractérisé en ce que, conjointement, l'organe de verrouillage (55) est monté rotatif sur l'une desdites parties (10, 11), autour d'un axe (57) parallèle à l'axe de l'ensemble, et l'autre partie (10, 11) comporte une patte (56) qui s'étend axialement, et qui interfère avec le trajet de rotation de l'organe de verrouillage (55).

21. Dispositif amortisseur de torsion suivant la revendication 20, caractérisé en ce que l'organe de verrouillage (55) est monté rotatif sur un flasque (60) solidaire de ladite partie (10, 11) qui le porte.

**Patentansprüche**

1. Vorrichtung zur Dämpfung von Drehschwingungen, insbesondere Kupplungsscheibe für Kraftfahrzeuge, mit mindestens zwei koaxial angeordneten Teilen, die innerhalb der Grenzen eines Winkelfederwegs und gegen in Umfangsrichtung zumindest über einen Bereich des genannten Winkelfederwegs zwischen ihnen wirkenden Federmitteln, nachfolgend als in Umfangsrichtung wirkende Federmittel bezeichnet, gegeneinander verdrehbar sind, und mit mindestens einem gegen Rückstellmittel auf die Zentrifugalkraft ansprechenden Organ, das zwischen einer Wartestellung und einer Betriebsstellung reversibel bewegbar ist, um den Operationsmodus der Vorrichtung zu verändern, dadurch gekennzeichnet, daß das auf die Zentrifugalkräfte ansprechende Organ ein Verriegelungsorgan (22, 40, 55, 66, 74) bildet, wobei in der Wartestellung das Verriegelungsorgan (22, 40, 55, 66, 74) ohne Wirkung ist und somit eine freie Aktionskapazität den in Umfangsrichtung wirkenden Federmitteln (16) beläßt, und dab es, in Betriebsstellung jenseits einer vorbestimmten, an seine Rückstellmittel gebundenen Drehzahl, in Umfangsrichtung einen formschlüssigen Anschlag, für eines der genannten Teile an dem anderen zumindest für eine Drehrichtung sicherstellt und somit die genannten in Umfangsrichtung wirdenden Federmittel (16) zumindest für einen Bereich des genannten Winkelfederwegs außer Betrieb setzt.

2. Vorrichtung nach Anspruch 1, dadurch gekennzeichnet, daß eines der Teile (10, 11) eine Führung (24) trägt, mit welcher das Verriegelungsorgan (22) in Eingriff ist, und daß das andere der Teile (10, 11) eine Klaue (27) aufweist, die sich axial erstreckt und mit dem Bewegungsweg des Verriegelungsorgans (22) längs seiner Führungs (24) in Einwirkung steht.

3. Vorrichtung nach Anspruch 2, dadurch gekennzeichnet, daß das Verriegelungsorgan (22) als eine einfache Platte ausgebildet ist, deren Führung (24) aus einer radialen länglichen Aussparung besteht, die in einem mit dem Teil (10, 11) fest verbundenen Flansch (23) vorgesehen und in welcher das Verriegelungsorgan (22) verschiebbar angeordnet ist.

4. Vorrichtung nach Anspruch 3, dadurch gekennzeichnet, daß der Flansch (23) am Ende der die Führung des Verriegelungsorgans (22) bildenden Aussparung (24) eine Rückhaltenase (26) aufweist, welche in die Aussparung (24) vorspringt. und daß das Verriegelungsorgan (22) hinter einer Schulter (30) zum radialen Anschlag an der Rukhaltenase (26) eine radiale Verlängerung (31) aufweist, an welcher die axiale Klaue (27) des anderen Teils (10, 11) anschlagen kann.

5. Vorrichtung nach einem der Ansprüche 2—4, dadurch gekennzeichnet, daß zwei Verriegelungsorgane (22) in sich diametral gegenüberliegenden Stellungen vorgesehen sind und daß die beiden Verriegelungsorgane (22) eine gemeinsame Rückholeinrichtung aufweisen, welche als eine Torsionsfeder (33) ausgebildet ist, deren beide Arme (34) jeweils an den Verriegelungsorganen (22) angebracht sind.

6. Vorrichtung nach einem der Ansprüche 3—5, wobei eines der Teile (10, 11) eine Nabe bildet, dadurch gekennzeichnet, daß der Flansch (23), der eine Führung für das Verriegelungsorgan (22) bildende Aussparung (24) aufweist, mit der Nabe (10) fest verbunden ist.

7. Vorrichtung nach Anspruch 6, wobei das andere Teil (11) eine ringförmige um die Nabe (10) drehbare Nabenscheibe ist, dadurch gekennzeichnet, daß die axiale Klaue (27), welche an diesem Teil (11) mit dem Verriegelungsorgan (22) zusammenwirkt, unmittelbar mit der Nabenscheibe (11) fest verbunden ist.

8. Vorrichtung nach Anspruch 1, dadurch gekennzeichnet, daß das Verriegelungsorgan (40) von einem sich in Umfangsrichtung erstreckenden Arm (41) getragen ist, welcher im Abstand vom Verriegelungsorgan (40) mit einem ersten der Teile (10, 11) fest verbunden ist und selbst die Rückholeinrichtung des Verriegelungsorgans (40) bildet.

9. Vorrichtung nach Anspruch 8, dadurch gekennzeichnet, daß der Arm (41) als Streifem mit radial relativ dünnem und axial relativ langem Querschnitt gebildet ist.

10. Vorrichtung nach Anspruch 7 oder 8, dadurch gekennzeichnet, daß das Verriegelungsorgan (40) durch einfaches Umschlagen des ihn tragenden Arms (41) gebildet ist.

11. Vorrichtung nach einem der Ansprüche 7—10, dadurch gekennzeichnet, daß der Arm (41) zur Befestigung am ihn tragenden Teil (10, 11) über einelänglich Aussparung (43) mit einer sich radial erstreckenden und um ein Hakenstück (45) verlängerten Klaue (44) des Teils (10, 11) in Eingriff steht, wobei sich das Hakenstück (45) zum Teil von der Kalue (44) an freitragend in Umfangsrichtung erstreckt und ein Bogenmaß in Umfangsrichtung aufweist, das im wesentlichengleich ist demjenigen jener.

12. Vorrichtung nach einem der Ansprüche 7—11, dadurch gekennzeichnet, daß zum Zusammenwirken mit dem Verriegelungsorgan (40) dem zweiten Teil (10, 11) ein Ring (48) zugeordnet ist, welcher dem Verriegelungsorgan (40) gegenüberliegend angeordnet ist und für zumindest einen Abschnitt der möglichen Winkelbewegung zwischen den Teilen drehfest mit dem zweiten Teil (10, 11) verbunden ist.

13. Vorrichtung nach Anspruch 12, dadurch gekennzeichnet, daß der Ring (48) von einem Flansch (49, 62) getragen ist, welcher mit dem zweiten Teil (10, 11) fest verbunden ist.

14. Vorrichtung nach Anspruch 12 oder 13, dadurch gekennzeichnet, daß zum Zusammenwirken mit dem Verriegelungsorgan (40) der dem zweiten Teil (10, 11) zugeordnete Ring (48) zumindest eine Einkerbung (50) aufweist.

15. Vorrichtung nach Anspruch 14, dadurch gekennzeichnet, daß der Rand (51) Einkerbung (50) abgeschrägt ist.

16. Vorrichtung nach Anspruch 15, dadurch gekennzeichnet, daß der entsprechende Rand (52) des Verriegelungsorgans (40) in komplementärer Weise abgeschrägt ist.

17. Vorrichtung nach einem der Ansprüche 8—16, dadurch gekennzeichnet, daß zwischen dem Verriegelungsorgan (40) und dem zugeordneten Ring (48) ein Reibbelag einwirkt.

18. Vorrichtung nach mindestens einem der Ansprüche 8—17, dadurch gekennzeichnet, daß der Arm (41), den das Verriegelungsorgan (40) aufweist, federnd verformbar ist.

19. Vorrichtung nach Anspruch 18, dadurch gekennzeichnet, daß in der Ruhestellung der Vorrichtung der das Verriegelungsorgan (40) tragende Arm (41) unter federnder Vorspannung steht.

20. Vorrichtung nach Anspruch 1, dadurch gekennzeichnet, daß das Verriegelungsorgan (55) um eine parallel zur Achse der Anordnung verlaufende Achse (57) an einem der genannten Teile (10, 11) drehbar angeordnet ist, und daß das andere Teil (10, 11) eine sich axial erstreckende Klaue oder Lasche (56) aufweist, welche in den Drehweg des Verriegelungsorgans (55) eingreift.

21. Vorrichtung nach Anspruch 19, dadurch gekennzeichnet, daß das Verriegelungsorgan (55) auf einem Flansch (60) drehbar angeordnet ist, der mit dem es tragenden Teil (10, 11) fest verbunden ist.

## Claims

1. Torsion damper device, in particular a clutch friction member, of the kind comprising at least two coaxial parts rotatably mounted relative to each other within limits of predetermined angular clearance and against elastic means adapted to act circumferentially therebetween for at least one range of the angular clearance, hereinafter called circumferentially acting elastic means, and at least one member which is sensitive to centrifugal force against return means, and which is thus reversibly movable between a standby position and an operative position, in order to modify the mode of operation of the device, characterized in that the said member sensitive to centrifugal force constitutes a locking member (22, 40, 55, 66, 74), in that in the standby position the said locking member (22, 40, 55, 66, 74) is inoperative and therefore affords freedom of action of the circumferentially acting elastic means (16), and in that, in the operative position, beyond a predetermined rotational speed associated with its return means, its ensures positive circumferential support of one of the said parts (10, 11) against the other for at least one direction of rotation, and therefore disables the said circumferentially acting elastic means (16) at least for a portion of the said range of clearance.

2. Torsion damper device according to claim 1, characterised in that one of the said parts (10, 11) carries a guide (24) with which the locking member (22) is in engagement, and the other of said parts (10, 11) comprises a lug (27) which extends axially and which intersects the path of the locking member (22) along its guide (24).

3. Torsion damper device according to claim 2, characterised in that the locking member (22) is constituted by a simple plate, and its guide (24) is constituted by a radially elongate cutout which is formed in a flange (23) fast with the part (10, 11) concerned and in which said locking member (22) is slidingly mounted.

4. Torsion damper device according to claim 3, characterised in that the said flange (23) has, at the end of the cutout (24) constituting the guide of the locking member (22), a retaining nose (26) which projects into said cutout (24) and, beyond a shoulder (30) adapted to cooperate radially in abutment against the said retaining nose (26) said locking member (22) comprises a radial extension (31) against which the axial lug (27) of the other part (10, 11) is capable of bearing.

5. Torsion damper device according to any of claims 2 to 4, characterised in that two locking members (22) are provided in diametrally opposite positions and said two locking members (22) have their return means in common, the said return means being constituted by a torsion spring (33), and the two branches (34) of the latter each being respectively attached to both locking members (22).

6. Torsion damper device according to any of claims 3 to 5, wherein one of the parts (10, 11) constitutes a hub, characterised in that the flange (23) comprising a cutout (24) constituting a guide for the locking member (22) is fast with said hub (10).

7. Torsion damper device according to claim 6, wherein the other part (11) is an annular hub disc mounted rotatably about the said hub (10), characterised in that the axial lug (27) provided on said part (11) for cooperation with the locking member (22) is directly fast with the said hub disc (11).

8. Torsion damper device according to claim 1, characterised in that the locking member (40) is carried by an arm (41) which extends circumferentially and which, remotely from the locking member (40), is fast with a first of the said parts (10, 11), the said arm (41) constituting in itself the return means of the said locking member (40).

9. Torsion damper device according to claim 8, characterised in that the arm (41) is formed by a plate of radially relatively thin section and axially relatively elongate section.

10. Torsion damper device according to either of claims 7, 8, characterised in that the locking member (40) is formed by a simple return bend on the arm (41) which carries it.

11. Torsion damper device according to any of claims 7 to 10, characterised in that, for its securement with the part (10, 11) which carries it, the arm (41) is simply engaged by a slot (43) in a lug (44) of the said part (10, 11) which extends radially and which is extended by a retaining heel (45) said retaining heel (45) extending circumferentially partly overhanging the said lug (44) and having a circumferential extent substantially equal to that of the latter.

12. Torsion damper device according to any of claims 7 to 11, charcterised in that, for cooperation with the locking member, a ring (48) is associated with the second of the parts (10, 11) concerned, said ring (48) being arranged transversely in line with the locking member (40) beyond the latter and being fast for rotation with the said second part (10, 11) for at least a portion of the possible angular clearance therebetween and the first part.

13. Torsion damper device according to claim 12, characterised in that the ring (48) is carried by a flange (49, 62) fast with the said second part (10, 11).

14. Torsion damper device according to claim 12 or 13, characterised in that, for cooperation with the locking member (40), the ring (48) associated with the second part (10, 11) has at least one notch (50).

15. Torsion damper device according to claim 14, characterised in that the edge (51) of the said notch (50) is bevelled.

16. Torsion damping device according to claim 15, characterised in that the corresponding edge (52) of the locking member (40) is itself complementarily bevelled.

17. Torsion damper device according to any of claims 8 to 16, characterised in that a friction facing is interposed between the locking member (40) and the associated ring (48).

18. Torsion damper device according to any one of claims 8 to 17, characterised in that the arm (41) carrying the locking member (40) is elastically deformable.

19. Torsion damper device according to claim 18, characterised in that, for the rest configuration of the device, the arm (41) carrying the locking member (40) is elastically preloaded.

20. Torsion damper device according to claim 1, characterised in that, conjointly, the locking member (55) is mounted rotatably upon one of the said parts (10, 11), about an axis (57) parallel to the axis of the assembly, and the other part (10, 11) comprises a lug (56) which extends radially and which intersects the path of rotation of the locking member (55).

21. Torsion damper device according to claim 20, characterised in that the locking member (55) is mounted rotatably on a flange (60) fast with said part (10, 11) which carries it.

FIG.1

FIG. 2

FIG. 3

FIG. 4

FIG. 5

FIG. 7

FIG.6

FIG.11

FIG.12

FIG.8

## FIG.10

## FIG.9

*FIG.13*

48

11

65

62

*XIV*

64   16   63

*FIG.14*

62

16   64   63